# EUROPEAN PATENT APPLICATION

(11) **EP 1 569 433 A1**
(43) Date of publication of application: **31.08.2005**
(21) Application number: 05003312.5
(22) Date of filing: 16.02.2005
(51) Int. Cl.: H04N 1/00

(54) **Multifunction apparatus**

(30) Priority: 25.02.2004 JP 2004050161
(71) Applicant: MATSUSHITA ELECTRIC INDUSTRIAL CO., LTD., Osaka 571-8501 (JP)
(72) Inventor: Nishizawa, Minoru, Fujisawa-shi, Kanagawa 252-0813 (JP); Nakatsuka, Hideki, Yokohama-shi, Kanagawa 236-0054 (JP); Ikegaya, Hitoshi, Utsunomiya-shi, Tochigi 321-0984 (JP)
(74) Representative: Grünecker, Kinkeldey, Stockmair & Schwanhäusser Anwaltssozietät

(57) **Abstract**

A multifunction apparatus having a plurality of functions (including a copier function) is able to change a display format on an operation screen that is displayed on a large-size touch panel for various operations, the display format being changed, by a panel controller, according to the preset output format information for each authenticated user, based on identification information read from a memory card carried by the user who enters a detection area.

## Description

### BACKGROUND OF THE INVENTION

### 1. Field of the Invention

The present invention relates to a multifunction apparatus that includes a panel for displaying an operation screen.

### 2. Description of Related Art

A multifunction apparatus having a plurality of functions such as printer, copier, scanner, facsimile, and e-mail functions has become common. Recent multifunction apparatuses usually include a large-size touch panel to accommodate various functions, the panel displaying various information in an operation screen for the user (e.g., Related Art 1). Some multifunction apparatuses have a function to output voice guidance to assist an operation through a touch panel.

[Related Art 1] Japanese Patent Laid Open Application 2002-7264

However, the language format displayed as characters in the multifunction apparatus panel is fixed for a region where the product is marketed/distributed. In addition, the character point number (font size) to be displayed in the multifunction apparatus panel is fixed (preset) for each product type. Therefore, when users speaking different languages are to use one multifunction apparatus, a user speaking a language different from the language preset in the multifunction apparatus has to read the unfamiliar language. At the same time, a user having poor eyesight or suffering from color blindness has to read the displayed characters at a fixed font size.

### SUMMARY OF THE INVENTION

The present invention addresses the above-described problems. The purpose of the invention is to provide a multifunction apparatus that can flexibly change the screen language format displayed on the panel and output format such as display font size according to each registered user.

In the present invention, the multifunction apparatus having a plurality of functions (including a copier function) is able to change a display format on an operation screen that is displayed on a panel for various operations, the display format being changed according to the preset output format information for each authenticated user, based on identification information read from a memory card carried by the user who enters a detection area.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 is a functional block diagram illustrating a multifunction apparatus according to an embodiment of the invention;
Fig. 2 illustrates registration information of a memory card that is readout/written-in by the multifunction apparatus according to the embodiment;
Fig. 3 is a data structure of a personal information table that is registered in a server (personal information server) connected to the multifunction apparatus according to the embodiment;
Fig. 4 illustrates an example of a personal information table configured for a certain user by the multifunction apparatus according to the embodiment;
Fig. 5 illustrates an example of an operation screen that is displayed on a large-size touch panel of the multifunction apparatus according to the embodiment;
Fig. 6 is a flowchart illustrating a process when a user specifies an operation on the multifunction apparatus according to the embodiment;
Fig. 7 is a flowchart illustrating a process when the user specifies the operation on the multifunction apparatus according to the embodiment;
Fig. 8 is a functional block diagram of the server connected to the multifunction apparatus according to the embodiment; and
Fig. 9 is a flowchart illustrating an operation of a personal authentication server connected to the multifunction apparatus of the embodiment.

### DETAILED DESCRIPTION OF PREFERRED EMBODIMENTS

The embodiments of the present invention are explained in the following, in reference to the above-described drawings.

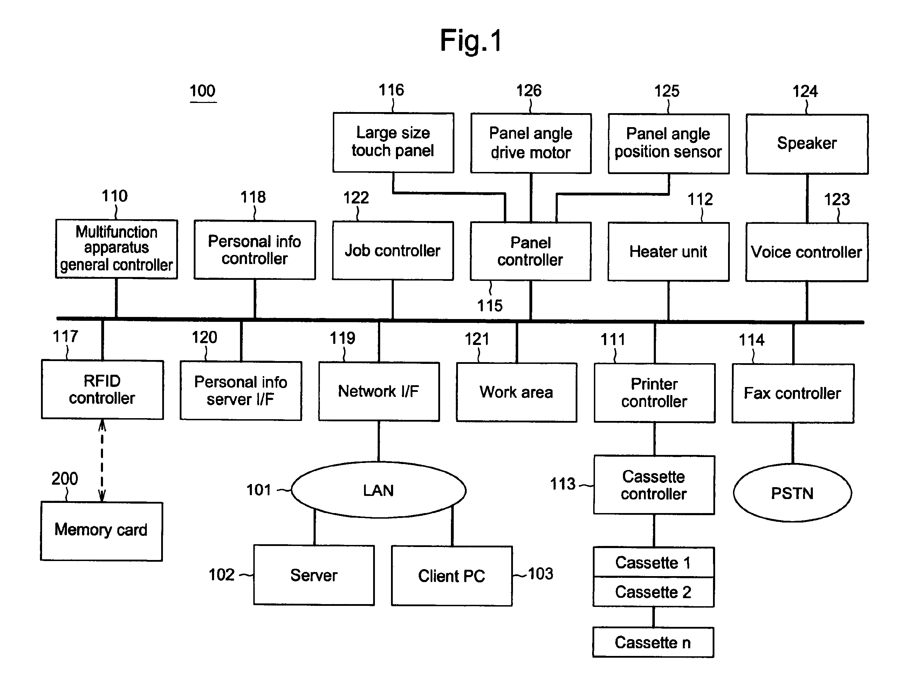

Fig. 1 is a functional block diagram of multifunction apparatus 100 according to an embodiment of the present invention. Fig. 1 also shows a portion of a network. Multifunction apparatus 100 can be connected to various servers 102 and client PCs 103, via LAN 101. Server 102 can be a personal information server that stores a personal information table and performs personal authentication and personal information distribution. Server 102 can also be a web server that executes a job selected from a menu in a remote procedure method. Although multifunction apparatus 100 includes printer, copier, scanner, facsimile, and e-mail functions, Fig. 1 only shows blocks related to the printer and facsimile functions.

Multifunction apparatus general controller 110 controls the overall multifunction apparatus 100. Printer controller 111 executes a process that converts printout data (given from a client) into image data in a predetermined format. Printer controller 111 especially gives a warm up instruction to heater unit (fusing apparatus) 112 in an image generation unit (not shown in the figure), and gives a cassette selection instruction to cassette controller 113. Cassette controller 113 selects an indicated cassette from a plurality of vertically stacked cassettes (1) - (n), and feeds paper to the image generation unit. Fax controller 114 has a modem that is connected to a PSTN to execute steps for a facsimile communication.

Panel controller 115 displays an operation screen and the like on large-size touch panel 116 and analyzes an operation input by the user from where the user touched on large-size touch panel 116 and from the displayed contents. In addition, the display format of the operation screen displayed on large-size touch panel 116 is changed according to the personal information table data that is stored in a work area (later described). For example, the language format and the display font size on the operation screen are changed. Large-size touch panel 116 can display the screen in colors.

RFID controller 117 reads and writes data on memory card 200 using electromagnetic wave signals. When a magnetic field is applied to memory card 200 from RFID controller 117, the reflected electromagnetic wave includes effect (information) corresponding to the memory contents of memory card 200. RFID controller 117 detects the memory contents of memory card 200 using the reflected electromagnetic wave. Conversely, electromagnetic wave signals applied from RFID controller 117 to memory card 200 is used to write information because the signals have a magnetic influence on memory card 200. RFID controller 117 performs non-contact reading/writing of card registration data, via electromagnetic wave signals, from/into memory card in the detection area approximately within a 1-meter radius range.

Personal information controller 118 manages the write-in destination of the registration data, which is read from memory card 200. In addition, personal information controller 118 notifies RFID controller 117 of data to be written in memory card 200. Network I/F 119 is a section that interfaces with LAN 101. Personal information server I/F 120 executes a process for communicating with a personal information server among servers 102 on LAN 101. Work area 121 stores data received from memory card 200 and personal information server. Job controller 122 provides a command to an appropriate unit when a job is executed using a function such as copier, printer, facsimile, scanner, or e-mail functions.

Voice controller 123 stores voice data for a voice guidance. Upon receiving a voice guidance instruction (in synchronization with the user's operation) from panel controller 115 and job controller 122, voice controller 123 outputs the corresponding voice data to speaker 124. In addition, the voice guidance to be output to speaker 124 is changed according to the personal information table data stored in the work area (later described). It is preferable that the voice guidance is voice data that assists the operation from the operation screen displayed on large-size touch panel 116. However, other forms of voice guidance can be output.

Panel angle position sensor 125 detects an angle of large-size touch panel 116. Panel angle drive motor 126 receives a control signal from panel controller 115 and adjusts the angle of large-size touch panel 116. In this embodiment, the angel of large-size touch panel 116 can be adjusted. However, the touch panel angel can be at a fixed location.

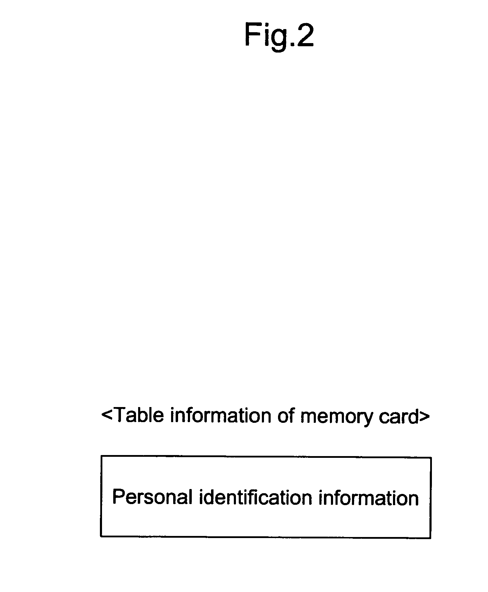

Fig. 2 illustrates the registration information of memory card 200.

As shown in the figure, memory card 200 stores only user ID as personal identification information. It is preferable to limit the registration information (of memory card 200) to user ID, and not to store other personal information, for security reasons. However, other personal information and/or group information can be stored.

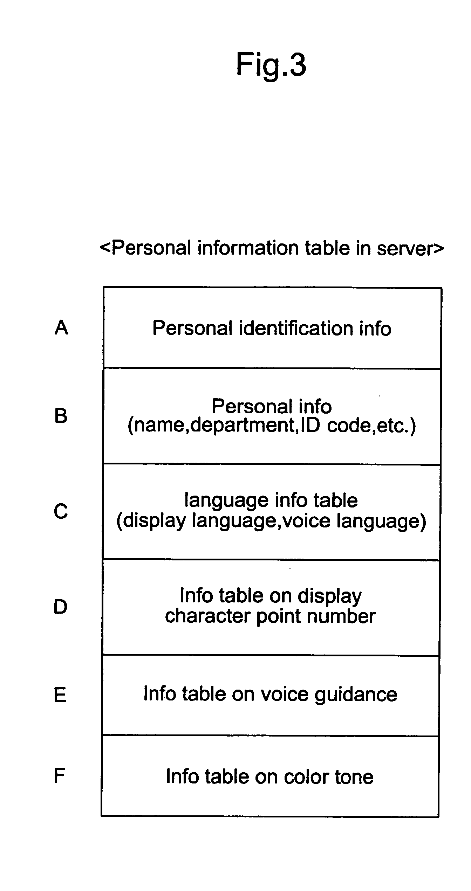

Fig. 3 illustrates a data structure of a personal information table that is registered in the personal information server (as server 102).

A personal information table is created for each registered user. As shown in Fig. 3, the personal information table includes a user ID (personal identification information); personal information such as a department name to which the user belongs; language information table associated with the registered user; display character font size information table; voice guidance information table; and color tone information table. The language information table includes a display (character) language to be displayed on large-size touch panel 116, and a voice (guidance) language to be output from speaker 124. The display character font size information table registers character font size to be displayed on large-size touch panel 116. The voice guidance information table registers an indication whether the voice guidance is to be output. The color tone information table registers how the color tone is changed when the change of tone is necessary for a user having a cataract or the like.

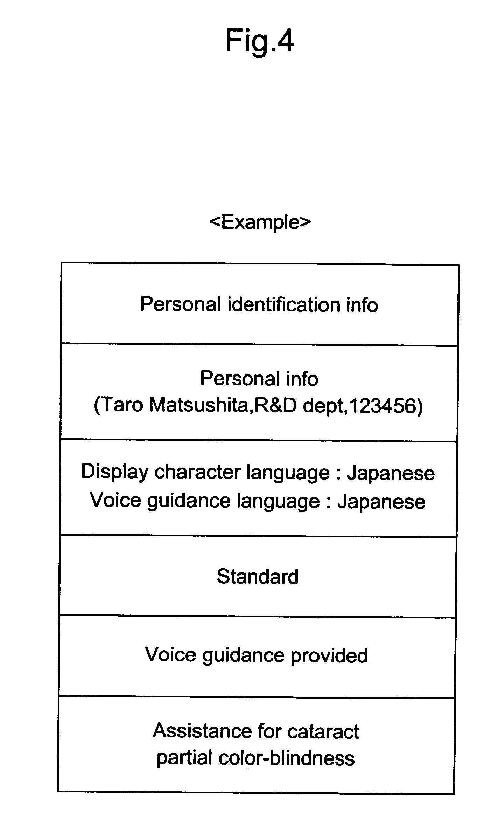

Fig. 4 illustrates an example of a personal information table configured for a specific user. In this example, the table is configured for "Taro Matsushita".

As shown in Fig. 4, as personal information, "Taro Matsushita" is registered as the name, "R&D dept." is registered for the department name to which the user belongs. At the same time, "123456" is registered as the ID code. In addition, "Japanese" is registered as the display character language, while "Japanese" is also registered as the voice guidance language. Further, "standard" font size is selected from the display character font size information table, while "voice guidance provided" is selected from the voice guidance information table. Also, "assistance for cataract" and "assistance for "partial color-blindness" are selected from the color tone information table. Therefore, when "Taro Matsushita" uses multifunction apparatus 100, large-size touch panel 116 display in Japanese in a standard font size, with the displayed color tone changed to assist for the cataract and the like. In addition, the Japanese voice guidance is output from speaker 124.

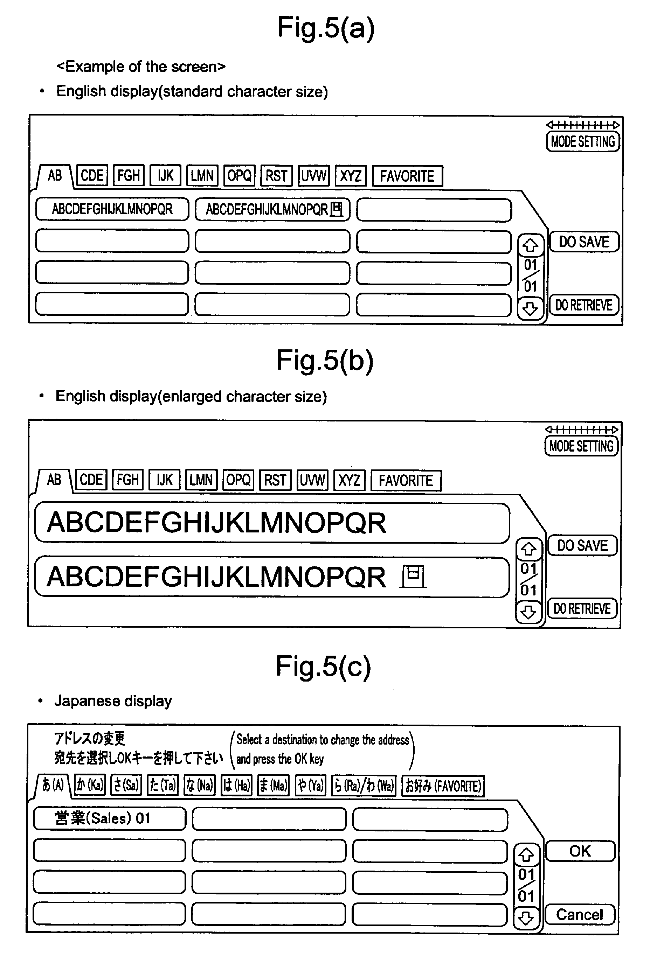

Fig. 5 illustrates an example of an operation screen that is displayed on large-size touch panel 116. Fig. 5 (a) illustrates an example when the operation screen is displayed in English with a standard font size. Fig. 5 (b) illustrates an example when the operation screen is displayed in English with an enlarged font size. Fig. 5 (c) illustrates an example when the operation screen is displayed in Japanese with a standard font size. Fig. 5 illustrates an example of a configuration for an address book screen. While Figs. 5 (a) and (b) illustrate the same address information, Fig. 5 (c) illustrates different address information.

The operation screen configuration is changed, by panel controller 115, according to the personal information table data stored in work area 121. In order to change the display character font size, the screen configuration can be changed according to the font size selected from the display character font size information table. Or, the font size can be enlarged, by storing the standard font size.

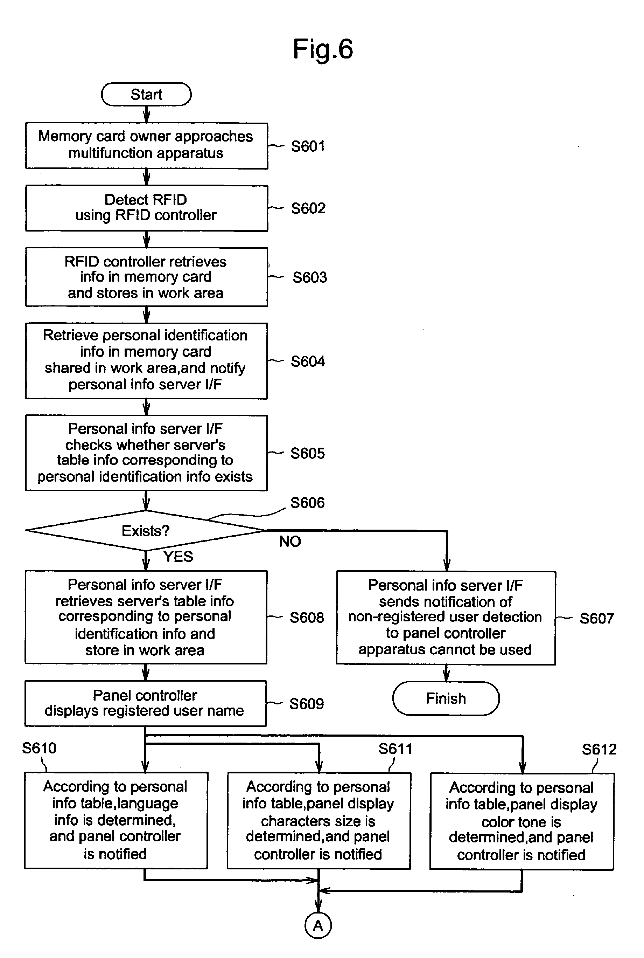

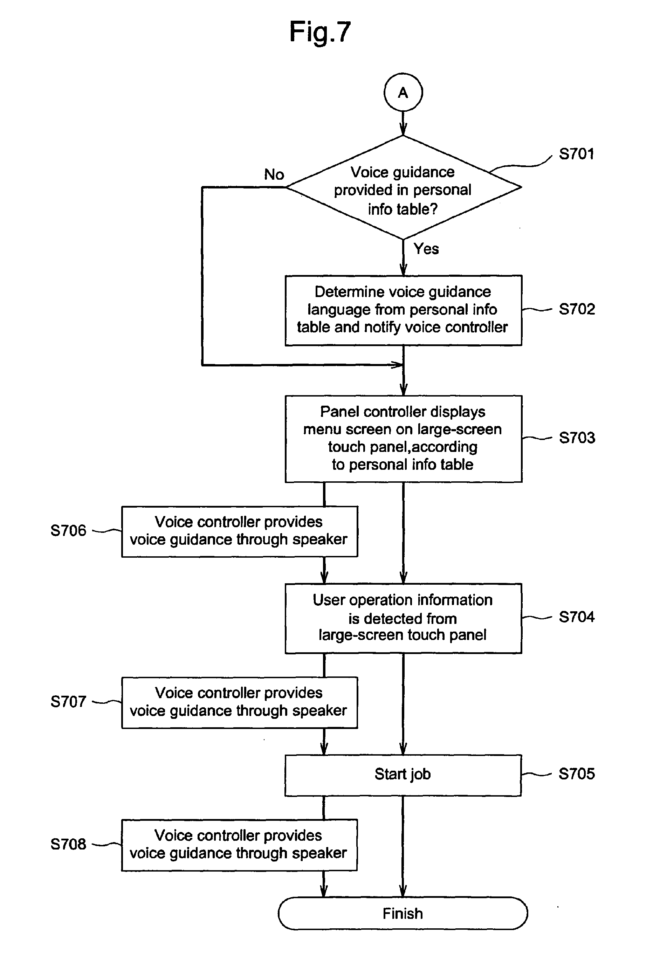

Next, Figs. 6 and 7 are used to illustrate a situation where the user instructs an operation on multifunction apparatus 100 according to the embodiment of the invention.

When a user (operator) having memory card 200 approaches multifunction apparatus 100 (S601), RFID controller 117 detects the user (S602). For example, memory card 200 having the personal identification information (user ID) is inserted into an employee badge holder carried by the user (e.g., a holder hanging from the user's neck). When the user carrying memory card 200 approaches the detection area of the RFID controller 117 (in this example, approximately within 1m range), RFID controller 117 scans the user ID in memory card 200 (S200).

RFID controller 117 stores the user ID scanned from the memory card 200 into work area 121 (S603). Multifunction apparatus general controller 110 retrieves the user ID stored in work area 121 and notifies personal information server I/F 120 via network I/F 119 (S604).

As described later, upon receiving the user ID, the personal information server (as server 102) checks whether a personal information table of the user having the scanned user ID is registered, and transmits data indicating whether such a table is registered.

Personal information server I/F 120 checks whether the user is registered in the personal information server, determining from the transmitted data indicating whether table is registered (S605). When the user's personal information table is not registered ("NO" at S606), personal information server I/F 120 outputs "notification of non-registered user detection" to panel controller 115. Upon receiving the "notification of non-registered user detection", a message stating that the apparatus cannot be used is displayed on large-size touch panel 116 (S607).

When the user's personal information table is registered ("YES" at S606), personal information server I/F 120 retrieves the personal information table data of the detected user from the personal information server, and stores the data in work area 121 (S608).

Panel controller 115 retrieves the detected user name from the personal information table data, the table data being stored in work area 121, and displays the name on large-size touch panel 116 as the person who has been allowed to use the apparatus (S609). For example, when the registered name in the personal information table is "Taro Matsushita", a text such as "Taro Matsushita is authenticated" is displayed. At this time, the character displayed on large-size touch panel 116 does not reflect the personal information table data stored in work area 121, but is in the preset standard font size.

Multifunction apparatus general controller 110 determines information to be displayed on large-size touch panel 116 according to the personal information table data stored in work area 121, and notifies panel controller 115 of the information. In particular, multifunction apparatus general controller 110 determines language information from the language information table (S610); panel display font size from the display character font size information table (S611); and panel display color tone from the color tone information table (S612). Then, multifunction apparatus general controller 110 notifies panel controller 115 of the determined information.

Next, multifunction apparatus general controller 110 checks whether the voice guidance is provided according to the personal information table data stored in work area 121 (S701). When the voice guidance is provided for the user, the language for the voice guidance is determined from the language information table, so that the voice controller 123 is notified (S702). When the voice guidance is not provided, the process at S702 is skipped and the control moves to S703. The following description is separately provided for when the voice guidance is provided and for when not provided. First, the illustration is provided for when the voice guidance is not provided.

When the voice guidance is not provided, panel controller 115 receives only a notification from multifunction apparatus general controller 110 at S610 - S612. In response to the notification, the menu screen is displayed on large-size touch panel 116 (S703). This menu screen displays characters according to the personal information table data specific for the registered user. In other words, the menu screen is displayed reflecting contents in the personal information table (including language information table, display character font size table, and color tone information table).

Menu screen displays various function buttons from where an instruction to multifunction apparatus 100 is input. After this menu screen is displayed on large-size touch panel 116, the user starts the operation. Thus, panel controller 115 detects the start of the operation through large-size touch panel 116 (S704). When the start of the operation is detected, job controller 122 starts a job provided by the indicated function (S705). Upon completing the job, the process is terminated.

The basic process for when the voice guidance is provided is the same as for when the voice guidance is not provided. However, after each process at S703 - S705, voice controller 123 provides the voice guidance through speaker 124 (S706 - S708). At this time, voice controller 123 outputs voice guidance according to the notification given at S702 by multifunction apparatus general controller 110. In particular, the voice guidance that reflects the contents of the language information table (in personal information table) is output from speaker 124.

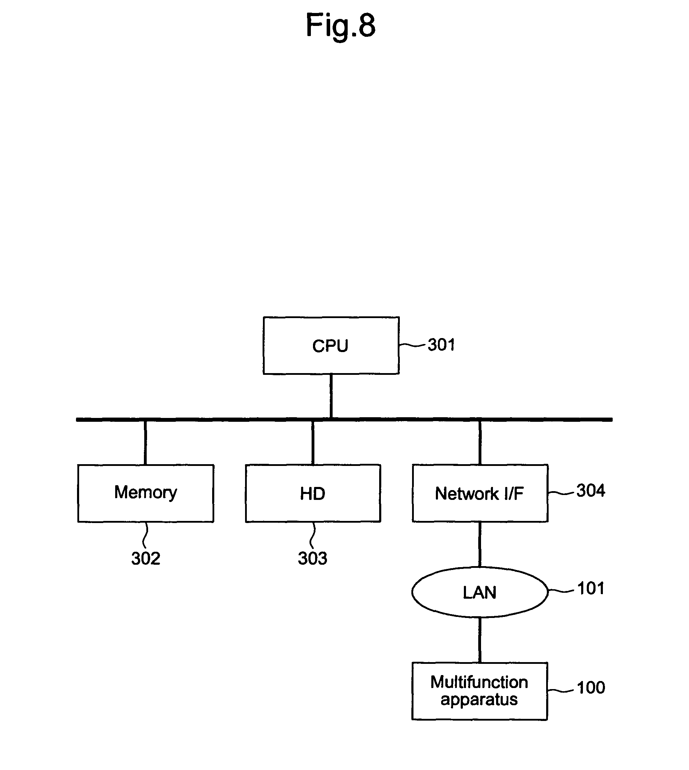

Fig. 8 is a functional block diagram of server 102 connected to multifunction apparatus 100, via LAN 101, according to the embodiment. Server 102 shown in Fig. 8 includes CPU 301 that controls the entire apparatus. Memory 302 stores control programs to be used by CPU 301 for controlling the entire apparatus, and has a function to perform as work memory of CPU 301. Hard disk (HD) 303 stores information to be distributed to multifunction apparatus 100 according to the present embodiment. For example, when server 102 functions as a server for personal information, the personal information table is stored for each registered user. When server 102 functions as a web server, server 102 stores menus for multifunction apparatus 100 and related jobs. Network interface (I/F) 304 interfaces with LAN 101.

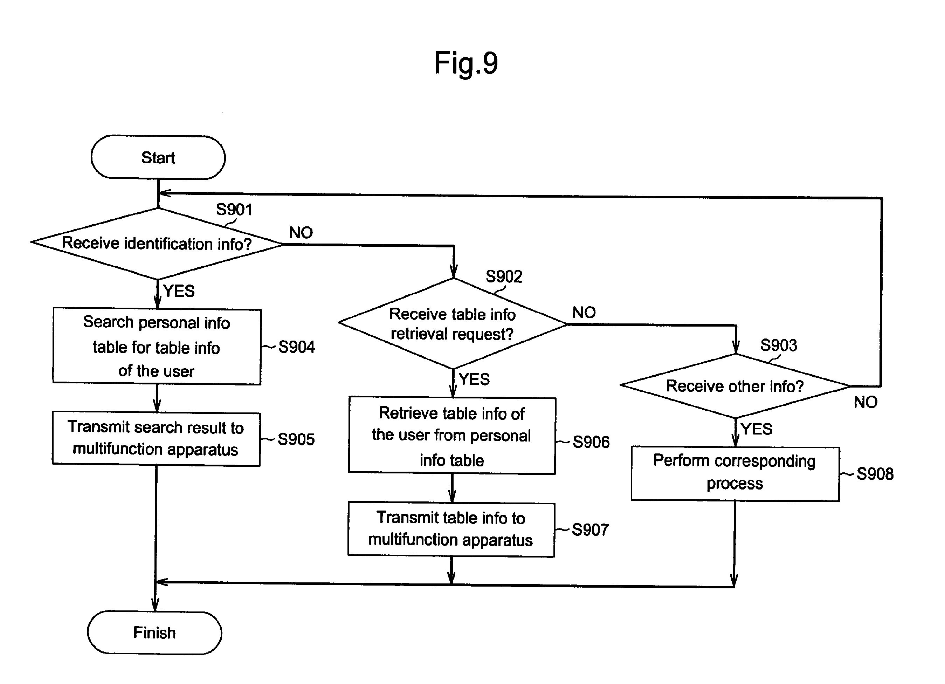

Fig. 9 illustrates an operation when server 102 having the above-described configuration functions as a personal authentication server.

Server 102 as a personal authentication server monitors, in an idle state, a reception of various information from multifunction apparatus 100 according to the present embodiment. In particular, server 102 monitors receptions of identification information (user ID) (S901), request to retrieve table information (S902), and other information (S903).

When identification information is received at S901, during the monitoring of receptions of various information, table information of the registered user is searched from the personal information table stored in HD 303 (S904). Accordingly, it is determined whether the received identification information is registered in the personal information table. Then, the result of the search (i.e., whether the identification information is registered) is transmitted to the accessing multifunction apparatus 100 (S905).

When a request to retrieve table information is received at S902, table information of the registered user is retrieved from the personal information table stored in HD 303 (S906). Accordingly, the table information of the registered user (associated with the previously received identification information) is retrieved. Then, the table information is transmitted to the accessing multifunction apparatus 100 (S907).

When other information is received at S903, a process required for the information is performed (S908). When various processes are completed at S905, S907, or S908, server 102 terminates the process. Accordingly, server 102 determines and executes the required process according to the information received from multifunction apparatus 100.

According to multifunction apparatus 100 of the present embodiment, output format information (personal information table data) that is preset for the authenticated user is retrieved based on the personal identification information (user ID) read from memory card 200. Then, the display format of the operation screen shown on large-size touch panel 116 is changed according to the output format information. Accordingly, the language format on the screen displayed on large-size touch panel 116, and the output format (e.g., display font size) are flexibly changed according to each registered user.

In particular, multifunction apparatus 100 according to the present embodiment changes the display language according to the display language included in the personal information table data. Therefore, it is possible to flexibly change the display language according to each registered user.

In addition, since the display font size is changed according to the font size included in the personal information table data, it is possible to flexibly change the display font size according to each registered user. Further, since the display color tone on large-size touch panel 116 is changed according to the panel display color tone included in the personal information table data, it is possible to flexibly change the panel display color tone according to each registered user. Furthermore, since the voice language is changed according to the voice language included in the personal information table data, it is possible to flexibly change the voice language (for voice guidance output from speaker 124) according to each registered user.

Additionally, the present embodiment illustrates a situation where server 102 (functioning as a personal information server) registers personal information and output format information such as a language information table, so that multifunction apparatus 100 retrieves the information (e.g., personal information) and stores the information in work area 121. Accordingly, it is not necessary for multifunction apparatus 100 to register the personal information table, which requires a large size memory, while flexibly changing the display of large-size touch panel 116. However, the present invention is not limited to the above-described embodiment. For example, multifunction apparatus 100 can install a large memory apparatus (e.g., hard disk apparatus) where the personal information is registered and from which the information is retrieved. In this case, apparatus by itself can flexibly change the display of large-size touch panel 116.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

This application is based on the Japanese Patent Application No. 2004-050161 filed on February 25, 2004, entire content of which is expressly incorporated by reference herein.

## Claims

1. A multifunction apparatus having a plurality of functions including a copier function, the apparatus comprising:
a panel that displays an operation screen for performing various operations;
an information retrieval unit that transmits an electromagnetic wave signal to a memory card carried by a user and retrieves identification information of the user, the user who has entered a detection area;
a memory that stores output format information, the information being preset for the user who is authenticated based on the identification information retrieved from the memory card; and
a display controller that changes a display format of the operation screen to be displayed on said panel, according to the output format information retrieved from the memory.

2. The multifunction apparatus according to claim 1, wherein the output format information includes a language display format to be displayed on the operation screen, and wherein said display controller changes a display language according to the language display format included in the output format information.

3. The multifunction apparatus according to claim 1, wherein the output format information includes a display font size to be displayed on the operation screen, and wherein said display controller changes a display font size according to the display font size included in the output format information.

4. The multifunction apparatus according to claim 1, further comprising:
a speaker that outputs voice; and
a voice controller that enables said speaker to output voice guidance;
wherein, the output format information includes a language format for the voice guidance, and wherein said voice controller changes a voice language according to the language format included in the output format information.

5. The multifunction apparatus according to claim 1, wherein a personal information table is stored in a server that is connected via a network, the table registering personal information including identification information and output format information of the user, and wherein the output format information of the user corresponding to the identification information retrieved from the memory card is retrieved from the server and stored in said memory.

6. The multifunction apparatus according to claim 1, further comprising:
a memory apparatus that stores a personal information table, that table registering personal information including identification information and output format information for each user,
wherein the output format information of the user corresponding to the identification information retrieved from the memory card is retrieved from said memory apparatus and stored in said memory.

7. A method for displaying an operation screen for performing various operations, using a multifunction apparatus having a plurality of functions including a copier function, the multifunction apparatus having a memory that stores output format information which is preset for a user who is authenticated based on identification information retrieved from a memory card, the method comprising:
transmitting an electromagnetic wave signal to the memory card carried by a user and retrieves identification information of the user, the user who has entered a detection area; and
changing a display format of the operation screen to be displayed, according to the output format information retrieved from the memory.

8. The method according to claim 7, wherein the output format information includes a language display format to be displayed on the operation screen, and wherein the changing the display format changes a display language according to the language display format included in the output format information.

9. The method according to claim 7, wherein the output format information includes a display font size to be displayed on the operation screen, and wherein the changing the display format changes a display font size according to the display font size included in the output format information.

10. The method according to claim 7, further comprising:
outputting voice from a speaker; and
enabling the speaker to output voice guidance;
wherein, the output format information includes a language format for the voice guidance, and wherein the enabling the speaker changes a voice language according to the language format included in the output format information.

11. The method according to claim 7, wherein a personal information table is stored in a server that is connected via a network, the table registering personal information including identification information and output format information of the user, and wherein the output format information of the user corresponding to the identification information retrieved from the memory card is retrieved from the server and stored in the memory.

12. The method according to claim 7, further comprising:
storing a personal information table into a memory apparatus, the table registering personal information including identification information and output format information for each user,
wherein the output format information of the user corresponding to the identification information retrieved from the memory card is retrieved from the memory apparatus and stored in the memory.
